# EUROPÄISCHE PATENTSCHRIFT

(11) **EP 1 417 110 B1**
(45) Veröffentlichungstag und Bekanntmachung des Hinweises auf die Patenterteilung: **21.09.2005**
(21) Anmeldenummer: 02758091.9
(22) Anmeldetag: 12.07.2002
(51) Int. Cl.: B60K 15/077, F02M 37/10

(54) **FÖRDEREINHEIT ZUR ANORDNUNG IN EINEM SCHWALLTOPF EINES KRAFTSTOFFBEHÄLTERS EINES KRAFTFAHRZEUGES**
PUMP UNIT ARRANGED IN AN INNER TANK OF A FUEL TANK OF A MOTOR VEHICLE
UNITE DE POMPAGE DESTINEE A ETRE MISE EN PLACE DANS UN RESERVOIR INTERNE D'UN RESERVOIR A CARBURANT D'UNE AUTOMOBILE

(30) Priorität: 14.08.2001 DE 10138838
(43) Veröffentlichungstag der Anmeldung: 12.05.2004
(73) Patentinhaber: SIEMENS AKTIENGESELLSCHAFT, 80333 München (DE)
(72) Erfinder: BURHENNE, Sabine, 75015 Bretten (DE); DEICHMANN, Johannes, 36211 Alheim-Sterkelshausen (DE); DEUBNER, Jörg, 36179 Bebra (DE); MARX, Peter, 38553 Wasbüttel (DE); OSBURG, Hans-Peter, 22941 Bargteheide (DE)
(86) Internationale Anmeldenummer: PCT/DE2002/002562
(87) Internationale Veröffentlichungsnummer: WO 2003/016084

(56) Entgegenhaltungen:
- DE-A- 19 504 217
- DE-A- 19 843 318
- US-A- 4 860 714
- US-A- 5 263 459
- US-A- 5 699 773

## Beschreibung

Die Erfindung betrifft eine Fördereinheit zur Anordnung in einem Schwalltopf eines Kraftstoffbehälters eines Kraftfahrzeuges mit einer zur Förderung von Kraftstoff zu einer Brennkraftmaschine des Kraftfahrzeuges vorgesehenen Kraftstoffpumpe, mit einer mit der Kraftstoffpumpe verbundenen Saugstrahlpumpe zur Förderung von Kraftstoff aus dem Kraftstoffbehälter in den Schwalltopf und mit zumindest einem Filterelement zum Filtern von Kraftstoff, wobei ein mit der Kraftstoffpumpe verbundenes Gehäuseteil zwei zur Führung des Kraftstoffs vorgesehene Kanäle aufweist. Sie betrifft weiter eine Fördereinheit gemäß dem Oberbegriff des Anspruchs 9. Derartige Fördereinheiten sind aus der US-A-4 860 714 bekannt.

Solche Fördereinheiten werden in heutigen Kraftfahrzeugen häufig eingesetzt und sind aus der Praxis bekannt. Das Gehäuseteil der bekannten Fördereinheit hat einen Flansch, mit dem es in eine Ausnehmung des Schwalltopfes eingesetzt und gegenüber diesem abgedichtet wird. Der zu der Saugseite der Saugstrahlpumpe führende Kanal ist bis zu dem Flansch geführt. Das Filterelement ist an der Unterseite des Schwalltopfes befestigt und hat einen Rand, mit dem es gegenüber dem Schwalltopf abgedichtet ist.

Nachteilig bei der bekannten Fördereinheit ist, dass sie sehr aufwändig aufgebaut ist und eine Vormontage zu einzelnen, miteinander kombinierbaren Baugruppen nicht möglich ist.

Der Erfindung liegt das Problem zugrunde, eine Fördereinheit der eingangs genannten Art so zu gestalten, dass sie besonders einfach aufgebaut ist und eine weitgehende Vormontage ermöglicht.

Dieses Problem wird bei der ersten eingangs genannten Fördereinrichtung erfindungsgemäß dadurch gelöst, dass das Gehäuseteil zur Halterung des zumindest einen Filterelementes ausgebildet ist und der Kanal ausschließlich innerhalb des Gehäuseteils von der Saugstrahlpumpe und/oder von der Kraftstoffpumpe zu dem Filterelement geführt ist.

Durch diese Gestaltung lässt sich die erfindungsgemäße Fördereinheit außerhalb des Kraftstoffbehälters und des Schwalltopfes mit dem Filterelement und dem Gehäuseteil vormontieren und anschließend als vormontierte Einheit in dem Schwalltopf montieren. Da der zu dem Filterelement führende Kanal ausschließlich innerhalb des Gehäuseteils angeordnet ist, werden mehrfache Abdichtungen zwischen dem Gehäuseteil und dem Filterelement vermieden. Hierdurch erfordert die erfindungsgemäße Fördereinheit eine besonders geringe Anzahl von Bauteilen. Die erfindungsgemäße Fördereinheit ist damit besonders einfach aufgebaut und lässt sich besonders kostengünstig fertigen.

Zur weiteren Verringerung der Anzahl der Bauteile der erfindungsgemäßen Fördereinheit trägt es bei, wenn die Saugstrahlpumpe einteilig mit dem Gehäuseteil gefertigt ist.

Die Saugstrahlpumpe könnte beispielsweise über eine Schlauchleitung mit der Kraftstoffpumpe verbunden sein. Zur weiteren Verringerung der Montage der erfindungsgemäßen Fördereinheit trägt es bei, wenn das Gehäuseteil einen Kanal für eine Treibmittelleitung der Saugstrahlpumpe hat.

Eine getrennte Fertigung der Saugstrahlpumpe und des Gehäuseteils ist meist erforderlich, wenn die Fördereinheit für unterschiedliche Schwalltöpfe und Kraftstoffbehälter vorgesehen ist. Bei der getrennten Fertigung des Gehäuseteils gestaltet sich die Vormontage der erfindungsgemäßen Fördereinheit besonders einfach, wenn das Gehäuseteil die Saugstrahlpumpe beinhaltet, oder eine Aufnahme für die Saugstrahlpumpe oder eines Teilbereichs der Saugstrahlpumpe aufweist.

Die Verbindung des Gehäuseteils mit der Kraftstoffpumpe hat gemäß einer anderen vorteilhaften Weiterbildung der Erfindung eine hohe Stabilität, wenn das Gehäuseteil einen ringförmigen, gegen die Kraftstoffpumpe vorgespannten Flansch aufweist. Weiterhin erfordert das Gehäuseteil hierdurch einen besonders geringen Materialeinsatz.

Das Gehäuseteil könnte beispielsweise mit einem aus Blech gefertigten Gehäuseteil der Kraftstoffpumpe verrollt sein. Die Montage und die Demontage des Gehäuseteils gestaltet sich jedoch gemäß einer anderen vorteilhaften Weiterbildung der Erfindung besonders einfach, wenn das Gehäuseteil eine Steckverbindung an der Kraftstoffpumpe aufweist.

Das der Erfindung zugrunde liegende Problem wird gemäß Anspruch 9 außerdem dadurch gelöst, dass ein Kanal der Treibmittelleitung der Saugstrahlpumpe ein durch ein den Einlassbereich aufweisendes Gehäuseteil bis zu der Kraftstoffpumpe hindurch geführtes Rohrstück hat. Dadurch gestaltet sich die erfindungsgemäße Fördereinheit besonders kompakt. Weiterhin werden Einlassbereiche mit sehr großen Abmessungen vermieden, die bisher zur Vermeidung von Strömungsverlusten notwendig waren.

Insbesondere bei aus Kunststoff gefertigten Gehäuseteilen erfordert die erfindungsgemäße Fördereinheit besonders wenige zu montierende Bauteile, wenn das Filterelement einstückig mit dem Gehäuseteil gefertigt ist. Durch diese Gestaltung lässt sich das Filterelement beispielsweise als Perforation einer Wandung des Gehäuseteils ausbilden.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Figur 1: einen unteren Teilbereich einer erfindungsgemäßen Fördereinheit mit angrenzenden Bauteilen eines Kraftstoffbehälters im Teilschnitt,
- Figur 2: eine Schnittdarstellung durch die Fördereinheit aus Figur 1 entlang der Linie II - II,
- Figur 3: ein Gehäuseteil der erfindungsgemäßen Fördereinheit aus Figur 1 in einer vergrößerten Schnittdarstellung entlang der Linie III - III,
- Figur 4: einen unteren Teilbereich einer weiteren Ausführung der erfindungsgemäßen Fördereinheit im Teilschnitt.

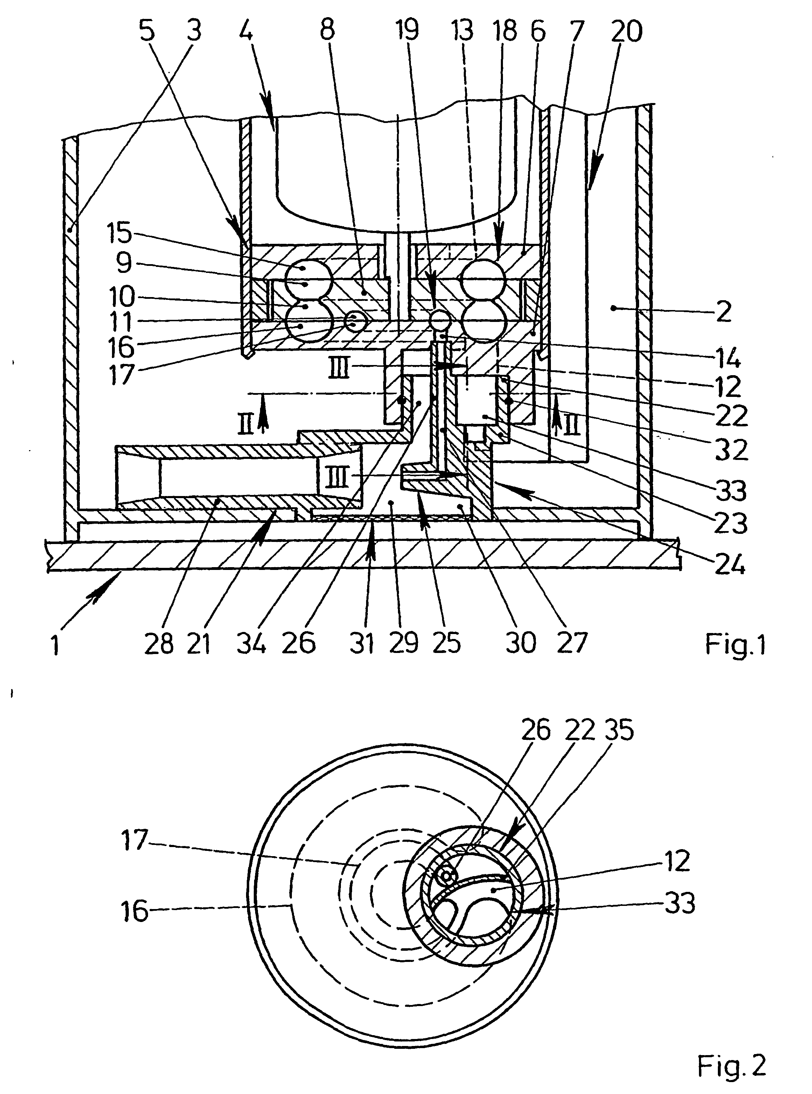

Figur 1 zeigt einen Bodenbereich eines Kraftstoffbehälters 1 eines Kraftfahrzeuges mit einer darin eingesetzten Fördereinheit 2. Die Fördereinheit 2, welche eine von einem Elektromotor 4 angetriebene Kraftstoffpumpe 5 umfasst, ist in einen Schwalltopf 3 angeordnet. Die Kraftstoffpumpe 5 hat ein zwischen zwei feststehenden Gehäuseteilen 6, 7 angeordnetes, von dem Elektromotor 4 antreibbares Laufrad 8. In dem Laufrad 8 sind zwei Kränze von Schaufelkammern 9 - 11 angeordnet. Die Gehäuseteile 6, 7 weisen im Bereich der Schaufelkammern 9 - 11 jeweils sich von einem Einlassbereich 12 zu einem Auslassbereich 13, 14 erstreckende teilringförmige Kanäle 15 - 17 auf. die teilringförmigen Kanäle 15 - 17 bilden mit den Schaufelkammern 9 - 11 Förderkammern 18, 19 zur Förderung des Kraftstoffs. Da einander gegenüberstehende, radial äußere Schaufelkammern 9, 10 ineinander übergehen, wird das Laufrad 8 in diesem Bereich axial durchströmt. Die Kraftstoffpumpe 5 ist damit als Seitenkanalpumpe ausgebildet. Bei einer Drehung des Laufrades 8 wird Kraftstoff über ein Filterelement 20 aus dem Schwalltopf 3 angesaugt. Durch die radial äußere Förderkammer 18 wird der Kraftstoff durch die Fördereinheit 2 zu einer nicht dargestellten Brennkraftmaschine des Kraftfahrzeuges geführt. Die radial innere Förderkammer 19 dient zur Förderung von Kraftstoff als Treibmittel zu einer Saugstrahlpumpe 21. Die Saugstrahlpumpe 21 saugt Kraftstoff über eine Öffnung im Boden des Schwalltopfes 3 an und fördert diesen in den Schwalltopf 3.

Die Saugstrahlpumpe 21 und zu dem Filterelement 20 und der Kraftstoffpumpe 5 führende Anschlussstücke 22, 23 sind als gemeinsames Gehäuseteil 24 gefertigt. Weiterhin weist das gemeinsame Gehäuseteil 24 ein von der radial inneren Förderkammer 19 zu einer Düse 25 der Saugstrahlpumpe 21 geführtes Rohrstück 26 mit Kanal 27 auf. Das Gehäuseteil 24 weist zudem einen bis zu einem zwischen der Düse 25 und einem Mischrohr 28 angeordneten Einlassbereich 29 der Saugstrahlpumpe 21 geführten Kanal 30 auf. Der Kanal 30 ist durch den Boden des Schwalltopfes 2 geführt. An dem dem Kraftstoffbehälter 1 zugewandten Ende des Kanals 30 ist ein Filterelement 31 angeordnet. Dieses Filterelement 31 ist einstückig mit dem Gehäuseteil 24 gefertigt. Das Anschlussstück 22 des Gehäuseteils 24 ist mittels eines O-Rings 32 gegenüber dem unteren Gehäuseteil 7 der Kraftstoffpumpe 5 abgedichtet und lässt sich in dieses einstecken. Weiterhin hat das Gehäuseteil 24 einen von dem in dem Schwalltopf 3 angeordneten Filterelement 20 bis zu dem Einlassbereich 12 der Förderkammern 18, 19 geführten Kanal 33. Oberhalb des Einlassbereichs 29 der Saugstrahlpumpe 21 befindet sich ein Sammelraum 34 für anzusaugenden Kraftstoff.

Figur 2 zeigt, dass das Anschlussstück 22 eine Trennwand 35 zur Abtrennung des Kanals 33 des Einlassbereichs 12 der Förderkammern von dem Sammelraum 34 hat. Das zu der in Figur 1 dargestellten Düse 25 der Saugstrahlpumpe 21 geführte Rohrstück 26 ist durch den Sammelraum 34 geführt. Durch diese Gestaltung kann sich der radial innere teilringförmige Kanal 17 über einen besonders großen Winkelbereich erstrecken. Der radial äußere teilringförmige Kanal 16 endet kurz vor dem Einlassbereich 12 der Kraftstoffpumpe 5.

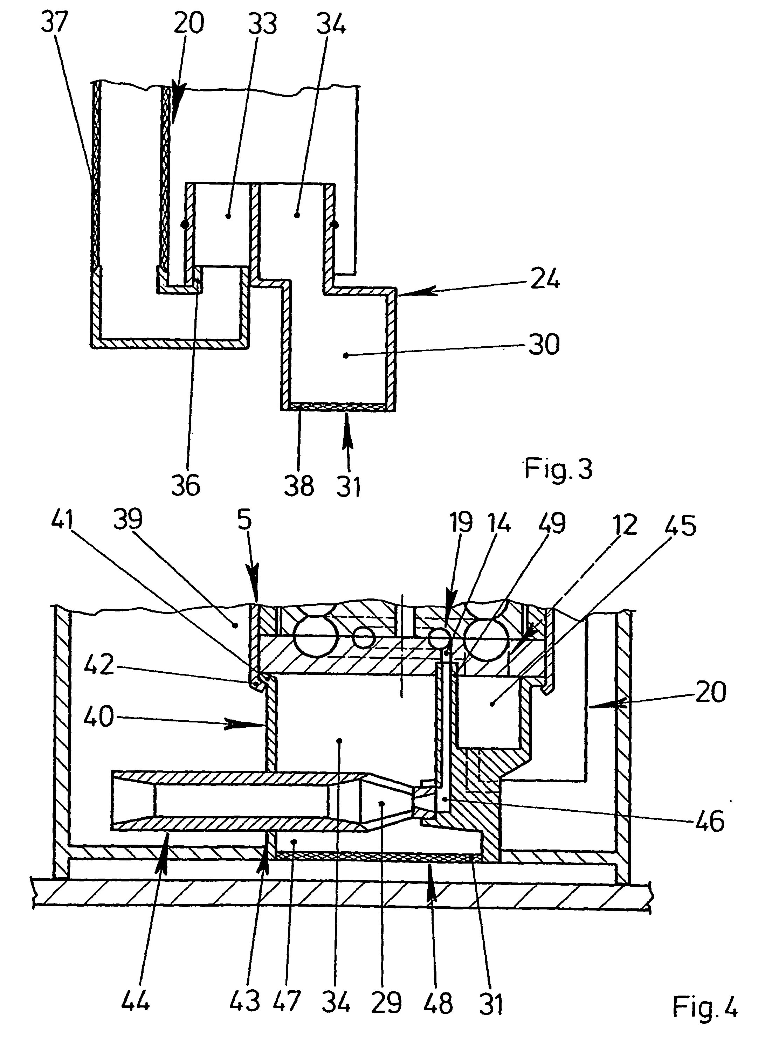

Figur 3 zeigt das die Kanäle 27, 30, 33 aufweisende Gehäuseteil 24 aus Figur 1 in einer Schnittdarstellung entlang der Linie III - III. Hierbei ist zu erkennen, dass das innerhalb des Schwalltopfes 3 angeordnete Filterelement 20 einen in den Kanal 33 des Gehäuseteils 24 eingesteckten Stutzen 36 und ein an dem Stutzen 36 befestigtes Filtergewebe 37 hat. Das Gehäuseteil 24 lässt sich damit mit dem Filterelement 20 zu einer baulichen Einheit vormontieren und anschließend mit der Kraftstoffpumpe 5 aus Figur 1 verbinden. Das in den Kraftstoffbehälter hineinragende Filterelement 31 hat ein einteilig mit dem Gehäuseteil 24 gefertigtes Filtergewebe 38 und bildet damit mit dem Gehäuseteil 24 eine bauliche Einheit.

Figur 4 zeigt eine Fördereinheit 39, bei der ein an der Kraftstoffpumpe 5 befestigtes Gehäuseteil 40 einen Flansch 41 aufweist. Dieser Flansch 41 wird von einem umgebördelten Blechrand 42 der Kraftstoffpumpe 5 hintergriffen. Weiterhin hat das Gehäuseteil 40 eine Aufnahme 43 zum Einstecken einer einstückig gefertigten Saugstrahlpumpe 44. Alternativ zu der einstückigen Fertigung der Saugstrahlpumpe kann das Gehäuseteil 40 auch eine nicht dargestellte Aufnahme für einen Teilbereich der Saugstrahlpumpe aufweisen. Das Gehäuseteil 40 hat einen Kanal 45 zur Verbindung des Einlassbereichs 12 der Kraftstoffpumpe 5 mit dem innerhalb des Schwalltopfes angeordneten Filterelement 20, einen Kanal 46 zur Verbindung der Saugstrahlpumpe 44 mit dem Auslassbereich 14 der radial inneren Förderkammer 19 und einen Kanal 47 zur Verbindung des Einlassbereichs 29 der Saugstrahlpumpe mit dem in dem Kraftstoffbehälter 1 angeordneten Filterelement 31. Das Gehäuseteil 40 hat einen Sammelraum 34 für durch die Saugstrahlpumpe 44 anzusaugenden Kraftstoff und ein Rohrstück 49 zur Aufnahme des Kanals 46. Ansonsten kann das Gehäuseteil 40 wie das Gehäuseteil 24 der Fördereinheit 2 aus Figur 1 ausgebildet sein.

## Patentansprüche

1. Fördereinheit zur Anordnung in einem Schwalltopf (2) eines Kraftstoffbehälters (1) eines Kraftfahrzeuges mit einer zur Förderung von Kraftstoff zu einer Brennkraftmaschine des Kraftfahrzeuges vorgesehenen Kraftstoffpumpe (5), mit einer mit der Kraftstoffpumpe (5) verbundenen Saugstrahlpumpe (21, 44) zur Förderung von Kraftstoff aus dem Kraftstoffbehälter (1) in den Schwalltopf (2) und mit zumindest einem Filterelement (20, 31) zum Filtern von Kraftstoff, wobei ein mit der Kraftstoffpumpe (5) verbundenes Gehäuseteil (24, 40) zwei zur Führung des Kraftstoffs vorgesehene Kanäle (30, 33, 45, 47) aufweist, **dadurch gekennzeichnet, dass** das Gehäuseteil (24, 40) zur Halterung des zumindest einen Filterelementes (20, 31) ausgebildet ist und die Kanäle (30, 33, 45, 47) ausschließlich innerhalb des Gehäuseteils (24, 40) von der Saugstrahlpumpe (21, 44) und von der Kraftstoffpumpe (5) zu dem Filterelement (20, 31) geführt sind.

2. Fördereinheit nach Anspruch 1, **dadurch gekennzeichnet, dass** die Saugstrahlpumpe (21) einteilig mit dem Gehäuseteil (24) gefertigt ist.

3. Fördereinheit nach Anspruch 1 oder 2, **dadurch gekennzeichnet, dass** das Gehäuseteil (24, 40) einen Kanal (27, 46) für eine Treibmittelleitung der Saugstrahlpumpe (21, 44) hat.

4. Fördereinheit nach Anspruch 1 oder 3, **dadurch gekennzeichnet, dass** das Gehäuseteil (40) eine Aufnahme (43) für die Saugstrahlpumpe (44) oder einen Teilbereich der Saugstrahlpumpe (44) aufweist.

5. Fördereinheit nach zumindest einem der vorhergehenden Ansprüche, **dadurch gekennzeichnet, dass** das Gehäuseteil (40) einen ringförmigen, gegen die Kraftstoffpumpe (5) vorgespannten Flansch (41) aufweist.

6. Fördereinheit nach zumindest einem der vorhergehenden Ansprüche, **dadurch gekennzeichnet, dass** das Gehäuseteil (24) eine Steckverbindung an der Kraftstoffpumpe (5) aufweist.

7. Fördereinheit nach zumindest einem der vorhergehenden Ansprüche, **dadurch gekennzeichnet, dass** das Filterelement (31) einstückig mit dem Gehäuseteil (24, 40) gefertigt ist.

8. Fördereinheit nach zumindest einem der vorhergehenden Ansprüche, **dadurch gekennzeichnet, dass** - das Gehäuseteil (24, 40) zwischen dem Einlassbereich (29) der Saugstrahlpumpe (21, 44) und der Kraftstoffpumpe (5) einen Sammelraum (34, 48) hat.

9. Fördereinheit zur Anordnung in einem Schwalltopf (2) eines Kraftstoffbehälters (1) eines Kraftfahrzeuges mit einer zur Förderung von Kraftstoff zu einer Brennkraftmaschine des Kraftfahrzeuges vorgesehenen Kraftstoffpumpe (5), mit einer mit der Kraftstoffpumpe (5) verbundenen Saugstrahlpumpe (21, 44) zur Förderung von Kraftstoff aus dem Kraftstoffbehälter (1) in den Schwalltopf (2) und mit zumindest einem Filterelement (20, 31) zum Filtern von Kraftstoff, wobei ein mit der Kraftstoffpumpe (5) verbundenes Gehäuseteil (24, 40) einen Einlassbereich (12) und zumindest einen zur Führung des Kraftstoffs vorgesehenen Kanal (30, 33, 45, 47) aufweist und zur Halterung des zumindest einen Filterelementes (20, 31) ausgebildet ist und der Kanal (30, 33, 45, 47) ausschließlich innerhalb des Gehäuseteils (24, 40) von der Saugstrahlpumpe (21, 44) und/oder von der Kraftstoffpumpe (5) zu dem Filterelement (20, 31) geführt ist, **dadurch gekennzeichnet, dass** ein Kanal (27, 46) der Treibmittelleitung der Saugstrahlpumpe (21, 44) ein durch einen den Einlassbereich (12 aufweisenden Gehäuseteil (24, 40) bis zu der Kraftstoffpumpe (5) hindurchgeführtes Rohrstück (26, 49) hat.

10. Fördereinheit nach Anspruch 9, **dadurch gekennzeichnet, dass** das Rohrstück (26, 49) einstückig mit dem Gehäuseteil (24, 40) gefertigt ist.

## Claims

1. Pump unit for arrangement in a surge chamber (2) of a fuel tank (1) of a motor vehicle, having a fuel pump (5) which is provided for pumping fuel to an internal combustion engine of the motor vehicle, having an ejector pump (21, 44) which is connected to the fuel pump (5) and is used to pump fuel out of the fuel tank (1) into the surge chamber (2), and having at least one filter element (20, 31) for filtering fuel, a housing part (24, 40) which is connected to the fuel pump (5) having two channels (30, 33, 45, 47) which are provided for guiding the fuel, **characterized in that** the housing part (24, 40) is designed to hold the at least one filter element (20, 31), and the channels (30, 33, 45, 47) are guided from the ejector pump (21, 44) and from the fuel pump (5) to the filter element (20, 31) exclusively within the housing part (24, 40).

2. Pump unit according to Claim 1, **characterized in that** the ejector pump (21) is manufactured as a single part with the housing part (24).

3. Pump unit according to Claim 1 or 2, **characterized in that** the housing part (24, 40) has a channel (27, 46) for a working-fluid line of the ejector pump (21, 44).

4. Pump unit according to Claim 1 or 3, **characterized in that** the housing part (40) has a holder (43) for the ejector pump (44) or a subregion of the ejector pump (44).

5. Pump unit according to at least one of the preceding claims, **characterized in that** the housing part (40) has an annular flange (41) which is prestressed against the fuel pump (5).

6. Pump unit according to at least one of the preceding claims, **characterized in that** the housing part (24) has a plug-in connection on the fuel pump (5).

7. Pump unit according to at least one of the preceding claims, **characterized in that** the filter element (31) is manufactured integrally with the housing part (24, 40).

8. Pump unit according to at least one of the preceding claims, **characterized in that** the housing part (24, 40) has a collecting space (34) between the inlet region (29) of the ejector pump (21, 44) and the fuel pump (5).

9. Pump unit for arrangement in a surge chamber (2) of a fuel tank (1) of a motor vehicle, having a fuel pump (5) which is provided for pumping fuel to an internal combustion engine of the motor vehicle, having an ejector pump (21, 44) which is connected to the fuel pump (5) and is used to pump fuel out of the fuel tank (1) into the surge chamber (2), and having at least one filter element (20, 31) for filtering fuel, a housing part (24, 40) which is connected to the fuel pump (5) having an inlet region (12) and at least one channel (30, 33, 45, 47) which is provided for guiding the fuel, and being designed to hold the at least one filter element (20, 31), and the channel (30, 33, 45, 47) being guided from the ejector pump (21, 44) and/or from the fuel pump (5) to the filter element (20, 31) exclusively within the housing part (24, 40), **characterized in that** a channel (27, 46) of the working-fluid line of the ejector pump (21, 44) has a pipe length (26, 49) which is guided to the fuel pump (5) through a housing part (24, 40) which has the inlet region (12).

10. Pump unit according to Claim 9, **characterized in that** the pipe length (26, 49) is manufactured integrally with the housing part (24, 40).

## Revendications

1. Unité d'alimentation destinée à être mise en place dans un pot de compensation (2) d'un réservoir à carburant (1) d'un véhicule automobile et comportant une pompe à carburant (5) prévue pour alimenter en carburant un moteur à combustion interne d'un véhicule automobile, une pompe à jet aspirant (21, 44) reliée à la pompe à carburant (5) et destinée à transférer du carburant du réservoir à carburant (1) dans le pot de compensation (2) et, au moins, un élément de filtrage (20, 31) destiné à filtrer le carburant, où une partie de boîtier (24, 40) reliée à la pompe à carburant (5) comporte deux canaux (30, 33, 45, 47) destinés à conduire le carburant, **caractérisée par le fait que** la partie de boîtier (24, 40) est conçue pour recevoir le au moins un élément de filtrage (20, 31) et que les canaux (30, 33, 45, 47) sont conduits exclusivement à l'intérieur de la partie de boîtier (24, 40) entre la pompe à jet aspirant (21, 44) et, respectivement, la pompe à carburant (5) et l'élément de filtrage (20, 31).

2. Unité d'alimentation selon la revendication 1 **caractérisée par le fait que** la pompe à jet aspirant (21) est fabriquée en une seule pièce avec la partie de boîtier (24).

3. Unité d'alimentation selon la revendication 1 ou 2 **caractérisée par le fait que** la partie de boîtier (24, 40) a un canal (27, 46) pour une conduite de fluide propulseur de la pompe à jet aspirant (21, 44).

4. Unité d'alimentation selon la revendication 1 ou 3 **caractérisée par le fait que** la partie de boîtier (40) comporte un support (43) pour la pompe à jet aspirant (44) ou pour une partie de la pompe à jet aspirant (44).

5. Unité d'alimentation selon au moins l'une des revendications précédentes **caractérisée par** l e fait que la partie de boîtier (40) comporte une bride annulaire (41) soumise à une précontrainte contre la pompe à carburant (5).

6. Unité d'alimentation selon au moins l'une des revendications précédentes **caractérisée par** l e fait que la partie de boîtier (24) a une liaison enfichable sur la pompe à carburant (5).

7. Unité d'alimentation selon au moins l'une des revendications précédentes **caractérisée par le fait que** l'élément de filtrage (31) est fabriqué en une seule pièce avec la partie de boîtier (24, 40).

8. Unité d'alimentation selon au moins l'une des revendications précédentes **caractérisée par le fait que** la partie de boîtier (24, 40) a un compartiment de captage (34, 48) entre la zone d'entrée (29) de la pompe à jet aspirant (21, 44) et la pompe à carburant (5).

9. Unité d'alimentation destinée à être mise en place dans un pot de compensation (2) d'un réservoir à carburant (1) d'un véhicule automobile et comportant une pompe à carburant (5) prévue pour alimenter en carburant un moteur à combustion interne du véhicule automobile, une pompe à jet aspirant (21, 44) reliée à la pompe à carburant (5) et destinée à transférer du carburant du réservoir à carburant (1) dans le pot de compensation (2) et, au moins, un élément de filtrage (20, 31) destiné à filtrer le carburant, où une partie de boîtier (24, 40) reliée à la pompe à carburant (5) comporte une zone d'entrée (12) et, au moins, un canal (30, 33, 45, 47) destiné à conduire le carburant et forme un support pour le au moins un élément de filtrage (20, 31) et où le canal (30, 33, 45, 47) est guidé exclusivement à l'intérieur de la partie de boîtier (24, 40) entre la pompe à jet aspirant (21, 44) et, respectivement, la pompe à carburant (5) et l'élément de filtrage (20, 31) **caractérisée par le fait qu'**un canal (27, 46) de la conduite de fluide de propulsion de la pompe à jet aspirant (21, 44) a une portion tubulaire (26, 49) conduisant, à travers une partie de boîtier (24, 40) comportant la zone d'entrée (12), jusqu'à la pompe à carburant (5).

10. Unité d'alimentation selon la revendication 9 **caractérisée par le fait que** la portion tubulaire (26, 49) est fabriquée en une seule pièce avec la partie de boîtier (24, 40).
